# EUROPÄISCHE PATENTSCHRIFT

(11) **EP 1 977 984 B1**
(45) Veröffentlichungstag und Bekanntmachung des Hinweises auf die Patenterteilung: **18.11.2009**
(21) Anmeldenummer: 08007009.7
(22) Anmeldetag: 13.07.2005
(51) Int. Cl.: B65G 17/44, B65G 17/02

(54) **Fördervorrichtung für Schüttgüter**
Conveyor device for bulk material
Dispositif d'acheminement pour produits en vrac

(30) Priorität: 31.05.2005 DE 202005008426 U
(43) Veröffentlichungstag der Anmeldung: 08.10.2008
(62) Teilanmeldung aus: 05015225.5
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse Patentanwälte

(56) Entgegenhaltungen:
- EP-A- 1 300 062

## Beschreibung

Die vorliegende Erfindung bezieht sich auf eine Fördervorrichtung mit einem Tragrahmen, einem Förderorgan, das zumindest zwei parallel zueinander umlaufenden angetriebenen Förderriemen, ein zwischen den Förderriemen angeordnetes Fördertuch mit zumindest einer Ablagefläche und das Förderorgan sich seitlich sich über die Ebene der Ablageflächen erhebende und über ein Basiselement und zumindest einen vom Basiselement aufragenden Finger verfügende Stützteile aufweist, und benachbarte Finger so angeordnet sind, dass diese auf einer geraden Transportebene des Förderorgans einen Zwischenraum zwischen sich begrenzen.

Fördervorrichtungen für Schüttgüter sind in einer Vielzahl von Ausgestaltungen bekannt. Die von der Fördervorrichtung zu transportierenden Schüttgüter werden an einem Punkt A auf das endlos umlaufende Förderorgan aufgegeben und bis zum einem Punkt B transportiert, an dem die Schüttgüter oder andere Transportgüter wieder abgegeben werden. Damit die zu befördernden Güter nicht seitlich vom Förderorgan herabfallen können, sind die bekannten Fördervorrichtungen mit Stützteilen versehen, die sich über die Ebene der Ablageflächen des Förderorgans erheben und Transportstücke, die vom Förderorgan herabzufallen drohen, zurückhalten sollen.

Aus dem Stand der Technik ist eine gattungsgemäße Fördervorrichtung aus dem deutschen Gebrauchsmuster DE 201 16 382 U1 bekannt. Die gattungsgemäßen Fördervorrichtungen weisen an sich zufriedenstellende Förderleistungen auf. Im Anstoßbereich der zwischen den Förderriemen angeordneten Fördertücher ergibt sich jedoch das Problem, das Material in den Spalt zwischen dem Fördertuch und den Förderriemen rutschen und von dort aus auch verlorengehen kann. Auch ist es je nach befördertem Transportgut möglich, dass sich im Anstoßbereich Transportgut oder Schmutzpartikel ansammeln und sich nach und nach zu einem Materialnest aufbauen, durch das das Fördertuch im Anstoßbereich aufgebeult wird. Dadurch vergrößert sich der Spalt zu einem Loch, das zu erhöhten Verlusten führt. Auch kann ein zunehmender Materialaufbau letztendlich dazu führen, dass das Fördertuch einreißt und ausgetauscht werden muß.

Die Stützteile können fest am Tragrahmen befestigt sein. Bei einer solchen Anordnung ergibt sich jedoch der Nachteil, dass die zu befördernden Transportgüter an den Stützteilen entlang schleifen und dadurch abgebremst werden. Hierdurch entstehen Leistungsverluste und die Transportgüter selber neigen dazu, aufgrund des Bremseffektes liegen zu bleiben und bei einer schrägen Beförderungsstrecke nach unten zu rollen. Zudem können empfindliche Transportgüter, wie beispielsweise Erntegüter, von den Stützteilen durch Reibung oder Einklemmen beschädigt werden.

Um diesen Nachteil zu vermeiden, sind die Stützteile häufig direkt am endlos umlaufenden Förderorgan befestigt, so dass sich die Stützteile mit gleicher Geschwindigkeit bewegen wie die auf dem Förderorgan beförderten Transportgüter. Bei einer solchen Anordnung schleifen die Stützteile nicht mehr an den beförderten Transportgütern entlang. An den Stellen, an denen sich die Laufrichtung des Förderorgans ändert, werden die Stützteile jedoch gestaucht oder gedehnt. An den Anschlußstellen der Ablageflächen zu den Förderriemen und zu den Stützteilen ergeben sich Lücken, durch die Transportgüter vom Förderorgan herabfallen und verlustig gehen können.

Demgemäß ist es die Aufgabe der vorliegenden Erfindung, eine Fördervorrichtung zu schaffen, bei der ein Materialaufbau im Übergangsbereich vom Fördertuch zum Förderriemen nach Möglichkeit vermieden, die Transportgüter besser gegen einen ungewollten Verlust durch Herabfallen gesichert, der Materialverschleiß an den Bauteilen der Fördervorrichtung verringert und das Risiko einer Beschädigung durch die Transportvorrichtung vermindert wird.

Die Aufgabe wird für eine gattungsgemäße Transportvorrichtung gelöst, indem zumindest ein Finger eines Stützteils bis in einen Bereich unterhalb des Basiselements ragt und der nach unten über das Basiselement ragende Abschnitt des Fingers tiefer nach unten ragt als das Fördertuch an seinem tiefsten Punkt.

Durch die erfindungsgemäße Gestaltung des Stützteils ist es möglich, eine dauerhaft dichte, trotzdem aber belastbare und flexible Übergangszone zu schaffen, in der Transportgüter nicht mehr beschädigt werden können. Die Seitenbegrenzung bewegt sich mit dem Fördertuch, so dass an den Seiten keine Reibung mit Stützteilen mehr auftritt. Die Stauch- und Dehnkräfte, die auf das Fördertuch und die Stützteile einwirken, bleiben im Bereich von Richtungsänderungen der Fördervorrichtung auf einem vergleichsweise niedrigen Niveau. Dadurch wird der Verschleiß und die Materialermüdung des Fördertuchs, der Stützteile und eventueller zusätzlicher Dichtungselemente gegenüber den vorbekannten Lösungen verringert. Bei der erfindungsgemäßen Gestaltung kann auf zusätzliche Dichtungsteile ganz verzichtet werden.

Mit dem Basiselement kann das Stützteil am Tragrahmen oder dem Förderorgan oder dem Tragmittel befestigt werden. Die Befestigung erfolgt dabei auf eine solche Art und Weise, dass sich der vom Basiselement aufragende Finger auch über die Ebene der Ablageflächen erhebt und auf diese Weise bei einer seitlichen Anordnung zur Ablagefläche des Förderorgans eine Stützwirkung für das auf dem Förderorgan beförderte Transportgut entfalten kann.

Durch den Zwischenraum zwischen zwei benachbarten Fingern können die Finger im Bereich der Umlenkung des Förderorgans in oder entgegen der Förderrichtung des Förderorgans verschwenkt werden, ohne dass die Finger dabei zwangsläufig aufeinander reiben müssen. Der Zwischenraum kann so weit reichen, dass er sich weitgehend über die gesamte Höhe eines Fingers erstreckt, er kann jedoch auch kürzer ausfallen, soweit die dann noch gegebene Flexibilität in Förderrichtung ausreicht, um sich an die Biegeradien anzupassen, um die das Förderorgan geführt ist.

Ändert sich die Bewegungsrichtung des Basiselementes infolge einer Umlenkung der Förderrichtung des Förderorgans, so kann ein an diesem Basiselement befestigter Finger ebenfalls um eine Querachse verschwenkt werden und dadurch seine Lage im Raum verändern. Bei einer solchen Veränderung der Raumlage schwenkt der Finger zunächst in den freien Zwischenraum, durch den der verschwenkte Finger vom benachbart angeordneten Finger getrennt wird. Da sich der verschwenkte Finger durch einen Freiraum bewegt, bleibt eine solche Verschwenkbewegung vollkommen verschleißfrei. Erst bei größeren Winkellagen, um die ein Finger verschwenkt wird, stößt dieser an einen benachbart angeordneten Finger an.

Wenn die Finger aus einem zumindest geringfügig flexiblen Material hergestellt sind, können sich diese bei einem Auftreffen auf einen benachbarten Finger leicht beiseite bewegen und auf diese Art aneinander vorbeigleiten. Der verschleißbehaftete Gleitkontakt zwischen zwei benachbart angeordneten Fingern ist jedoch nur auf die äußeren Spitzen der Finger beschränkt, die gleichzeitig jedoch am weitesten vom Basiselement entfernt liegen, so dass sich die Elastizität der Finger in diesem Bereich maximal auswirken und die Reibkräfte, mit denen die Oberflächen aufeinander reiben, in einem unkritischen Bereich gehalten werden können.

Aus der erfindungsgemäßen Anordnung der Finger ergibt sich ein weiterer Vorteil: Während großvolumigere Transportgüter, die auf dem Förderorgan befördert werden, zu groß sind, um durch die Zwischenräume zwischen den Fingern hindurchfallen zu können, ist es möglich, dass Schmutz und Sand durch die Zwischenräume aus dem Förderweg des Förderorgans herausfallen können. Auf diese Weise kann das zu befördernde Transportgut von Schmutz und Fremdpartikeln gereinigt werden.

Bei einem leistenförmig ausgebildeten Basiselement ergibt sich auf der Unterseite eine große Stützfläche, mit der das Basiselement auf dem Förderorgan und/oder dem umlaufenden Tragmittel befestigt werden kann. An einem Abschnitt eines Basiselementes können nebeneinander mehrere Finger mit einem jeweiligen Zwischenraum zwischen sich angeordnet sein. Durch die Montage eines einzelnen Basiselementes können auf diese Weise mehrere Finger am Förderorgan, dem umlaufenden Tragmittel und/oder dem Tragrahmen befestigt werden.

Ist das Basiselement des Stützteils aus einem flexiblen Material hergestellt, kann sich dieses auch engeren Biegeradien des Förderorgans oder des Tragmittels anpassen und mit diesen endlos umlaufen. Die Basiselemente der Stützteile können eine vergleichsweise flache Form aufweisen, so dass diese kaum über die Ablageflächen des Förderorgans hervorstehen. Bei einem flachen Querschnitt der Basiselemente sind diese bei einem Umlaufen nur vergleichsweise geringen Zug-, Druck- und Biegekräften ausgesetzt, so dass sich die Basiselemente gegenüber dem Förderorgan und/oder dem Tragmittel gar nicht oder in geringem Umfang relativ bewegen. Auf diese Weise wird der Verschleiß der Kontaktflächen minimal gehalten. Andererseits stellen die von den Basiselementen aufragenden Finger sicher, dass die Ablageflächen des Förderorgans seitlich gegen sonst eventuell herabfallende Transportgüter abgestützt werden.

Unabhängig davon, ob die Finger zusammengeschoben oder gespreizt werden, bleiben die Finger je nach Auswahl des Maßes für den Zwischenraum zwischen zwei Fingern in einem solchen Abstand zueinander, dass ein Herabfallen von Transportgütern von der Fördervorrichtung zuverlässig ausgeschlossen ist.

Weitere Verbesserungen und bevorzugte Ausgestaltungen der Erfindung lassen sich den kennzeichnenden Merkmalen der Unteransprüche, der nachfolgenden gegenständlichen Beschreibung und den Zeichnungen entnehmen.

Die Erfindung wird nun anhand eines Ausführungsbeispieles näher erläutert. Es zeigen:
- Fig. 1:: eine Ansicht auf eine Fördervorrichtung,
- Fig. 2:: eine Ansicht auf ein alternativ gestaltetes Stützteil, und
- Fig. 3:: eine Querschnittsansicht auf einen Förderriemen mit dem alternativ gestalteten Stützteil.

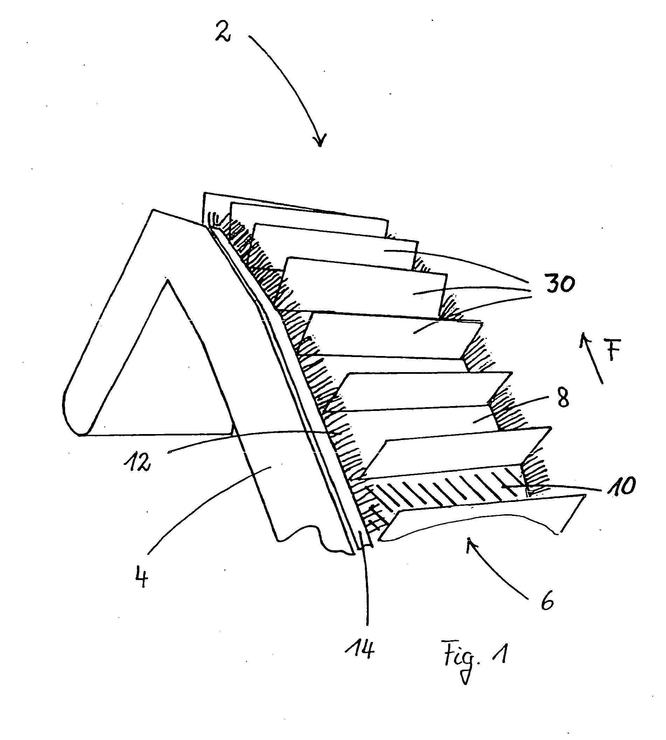

In Fig. 1 ist eine Fördervorrichtung 2 gezeigt, auf deren Tragrahmen 4 ein ausschnittsweise dargestelltes Förderorgan 6 endlos umlaufend angeordnet ist. Das Förderorgan 6 weist Ablageflächen 10 auf, die durch Trennelemente 30 voneinander abgetrennt sind. Das im Ausführungsbeispiel dargestellte Förderorgan 6 bewegt ein auf den Ablageflächen 10 eines Fördertuchs 8 liegendes Transportgut in die Förderrichtung F. Das auf den Ablageflächen 10 liegende Transportgut wird durch die Trennelemente 30 daran gehindert, entgegen der Förderrichtung F an dem Förderorgan 6 wieder herabzurollen. Um das Transportgut davon abzuhalten, seitlich von den Ablageflächen 10 herabzufallen, sind an den Seiten der Ablageflächen 10 des Förderorgans 6 Stützteile 12 angeordnet. Die Stützteile 12 könnten entweder auf dem Förderorgan 6 bzw. den Ablageflächen 10 des Förderorgans 6 befestigt sein, oder die Stützteile 12 sind fest mit dem Förderriemen 14 als Tragmittel verbunden. Als Förderriemen 14, die das Förderorgan 6 und das darauf liegende Transportgut tragen, kommen beispielsweise Zahnriemen, aber auch entsprechend gestaltete Ketten in Betracht. Natürlich kann das Förderorgan 6 während eines Umlaufens bereichsweise oder vollständig durch weitere Stützräder oder Stützflächen abgestützt werden. Im Ausführungsbeispiel kommt dem Förderiemen 14 die Funktion zu, neben einer Lagefixierung des Förderorgans 6 auch Antriebskräfte von einer Antriebsquelle auf das Förderorgan 6 zu übertragen.

In der Fig. 1 ist erkennbar, dass sich das Förderorgan 6 im dargestellten unteren Abschnitt in einer gerade aufwärts gerichteten Transportebene bewegt, während es zum oberen Drittel der sichtbaren Förderstrecke hin leicht in eine horizontale Richtung abknickt, dann am Scheitelpunkt schärfer in einer abwärts gerichtete Richtung umgelenkt wird, um sodann nach einer weiteren Förderstrecke um 180° um eine Umlenkwalze umlaufend zurückzulaufen. Im Ausführungsbeispiel ist die Untersicht der Fördervorrichtung 2 verkleidet, so dass dort das Förderorgan 6 dort nicht im Detail sichtbar ist.

Mit dem Begriff "Basiselement" soll nicht ausgedrückt werden, dass es sich dabei um ein gesondertes Bauteil handeln muß, sondern es kann auch einstückig zusammen mit einem oder mehreren Fingern 34 ein Stützteil 12 bilden. Das Basiselement 32 ist der Funktionsteil eines Stützteils 12, der einen oder mehrere Finger 34 mit dem Förderriemen 14 und/oder dem Förderorgan 6 beziehungsweise dem Fördertuch 8 verbindet. Das Basiselement 32 nimmt die auf einen oder mehrere Finger 34 einwirkenden seitlichen Biegekräfte auf und überträgt diese auf den Förderriemen 14 und/oder das Förderorgan 6 beziehungsweise das Fördertuch 8. Auch werden die Finger 34 über das Basiselement 32 in ihrer Einbauposition gehalten. Indem das Basiselement 32 in der Richtung quer zur Förderrichtung F eine größere Breite aufweist als die vom Basiselement 32 aufragenden Finger 34, ergibt sich in seitlicher Richtung eine hohe Abstützwirkung der Finger 34 durch das Basiselement 32.

Erreicht ein auf einem Förderorgan 6 oder einem Förderriemen 14 ortsfest montiertes Basiselement 16 einen Abschnitt der Fördervorrichtung 2, in dem die Förderrichtung des Förderorgans 6 bzw. des Förderriemens 14 umgelenkt wird, so paßt sich der jeweils im Umlenkungsbereich befindliche Teil des Basiselementes 32 der neuen Förderrichtung F an, wenn dieses flexibel ausgebildet ist. Durch die sich aus der Anpassungsbewegung ergebende unterschiedliche räumliche Orientierung des betreffenden Abschnittes des Basiselementes 32 verschwenkt der mit dem entsprechenden Abschnitt des Basiselementes 32 verbundene Finger 34 um eine quer zur Förderrichtung F liegende Schwenkachse in Richtung B. Je nach Umlenkungsrichtung im Umlenkungsbereich kann der Finger 34 in Förderrichtung F gesehen nach vorne oder hinten verschwenkt werden. Bei einer Verschwenkungsbewegung nach vorne spreizt sich der Zwischenraum 36 zwischen dem verschwenkten Finger 34 und dem nachfolgenden Finger 34 auf, während sich der Zwischenraum 36 bei einer Verschwenkbewegung nach hinten verkleinert. Je kleiner der Biegeradius ist, dem sich der jeweilige Abschnitt des Basiselementes 32 anpaßt, um so größer ist die Verschwenkbewegung eines zugehörigen Fingers 34 im wesentlichen parallel zur Förderrichtung F des Förderorgans 6, und um so stärker verändert sich das Abstandsmaß im verbleibenden Zwischenraum 36 zum benachbarten Finger 34.

Die Zwischenräume 36 können über ihre Höhe H ein unterschiedliches Abstandsmaß zwischen den benachbarten Fingern 34 aufweisen. Ein unterschiedliches Abstandsmaß kann sich beispielsweise ergeben, wenn ein Finger 34 in einem zum Basiselement 32 entfernteren Abschnitt schmaler ist als in einem zum Basiselement 32 näher liegenden Abschnitts. Genauso ist es möglich, dass der Zwischenraum 36 zwischen zwei benachbarten Fingern 34 in einer geraden Transportebene in einem zum Basiselement 32 entfernteren Abschnitt breiter ist als in einem zum Basiselement 32 näher liegenden Abschnitt. Auch können die beiden Möglichkeiten, die Finger 34 und die Zwischenräume 36 mit unterschiedlichen Maßen zu versehen, in einer geeigneten Weise miteinander kombiniert werden.

Aus der Befestigung mehrerer Finger 34 an einem Basiselement 32 ergibt sich eine Montagevereinfachung. Außerdem verteilen sich Belastungskräfte, die auf einen einzelnen Finger 34 einwirken, besser über die Länge eines längeren Basiselementes 32. Um eine gute Abstützwirkung entfalten zu können, können auf der den Ablageflächen 10 abgewandten Seiten eines Fingers 34 über einen Teil oder die gesamte Höhe des Fingers 34 reichende Stützrippen 38 vorgesehen sein. Ein Finger 34 verfügt in Querrichtung zur Förderrichtung F über eine begrenzte Beweglichkeit. Das Maß der Beweglichkeit in Querrichtung kann durch die Form und das verwendete Material für den Finger 34, aber auch durch die Form, das Material und die Abmessungen der Stützrippe 38 beeinflußt werden. Die Beweglichkeit sollte so bemessen sein, dass die Biegekräfte, die von einem Finger 34 aufgenommen werden können, ausreichen, um die üblicherweise auf einer Fördervorrichtung 2 beförderten Transportgüter zurückhalten zu können.

Im Ausführungsbeispiel ragen die Finger 34 in einer annähernd senkrechten Richtung vom Basiselement 32 auf. Es ist jedoch auch möglich, einzelne oder mehrere Finger 34 in einer von der senkrechten Linie abweichenden Richtung vom Basiselement 32 aufragen zu lassen. Um eine Kollision von Fingern 34 in einem Umlenkungsbereich zu vermeiden, ist es auch möglich, aufeinanderfolgende Finger 34 in voller Höhe oder in einer Teilhöhe in einer unterschiedlichen Winkellage anzuordnen, so dass diese im Bereich einer Verschwenkung in eine Richtung parallel zur Förderrichtung des Förderorgans 6 berührungslos oder nur mit geringen Biegekräften aneinander vorbeischwenken können.

In einer Ausgestaltung der Erfindung sind die Basiselemente 32 am umlaufenden Förderriemen 14 befestigt. Dabei weisen die Basiselemente 32 ein so flaches Profil auf, dass deren Bauhöhe in etwa der neutralen Phase des Förderriemens entspricht und diese kaum über die Förderriemen 14 hervorstehen.

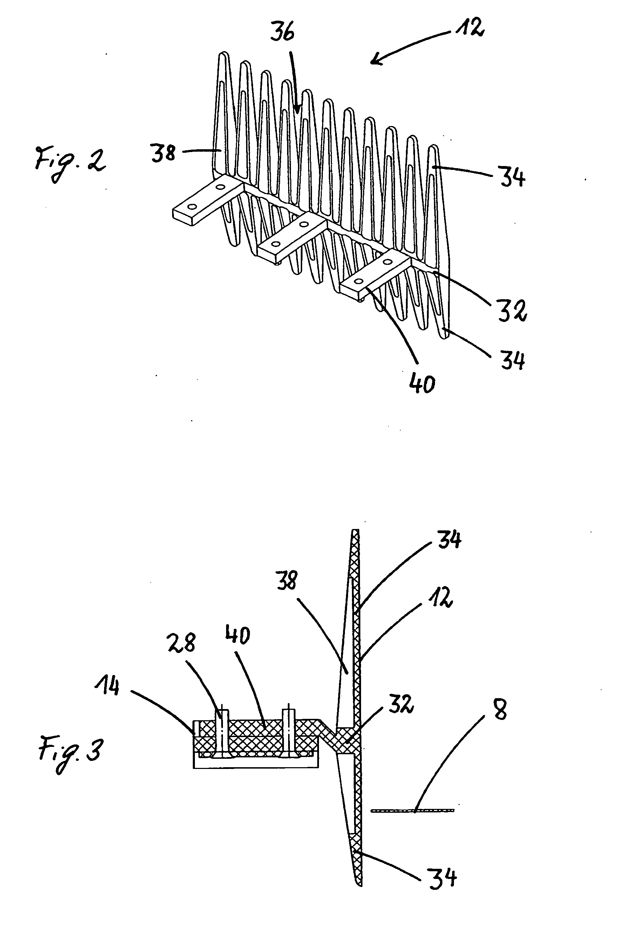

In Fig. 2 ist eine alternative Gestaltung eines Stützteils 12 gezeigt. Bei dem dort gezeigten Stützteil 12 ist das Basiselement 32 nicht an der Unterseite des Stützteils 12, sondern etwa im Übergang zwischen dem unteren und mittleren Drittel beziehungsweise etwa dem mittleren Bereich der Höhe H des Stützteils 12 angeordnet. Die Finger 34 des in Fig. 5 gezeigten Stützteils 12 ragen also bis in einen Bereich unterhalb des Basiselementes 32. Die das Basiselement 32 nach unten überragenden Abschnitte der Finger 34 verlaufen im Ausführungsbeispiel annähernd horizontal wie auch die das Basiselement 32 überragenden Abschnitte. Die das Basiselement 32 nach unten überragenden Abschnitte der Finger 34 können jedoch auch angewinkelt sein, um auf diese Weise das benachbarte Fördertuch 8 zu untergreifen. Wird das Fördertuch 8 in diesem Bereich durch ein Transportgut belastet, drückt dieses auf die nach unten weisenden Abschnitte der Finger 34. Durch die Drehgelenkwirkung des annähernd im mittleren Abschnitt befindlichen Basiselements 32 werden die dieses nach oben hin überragenden Abschnitte der Finger nach innen auf das Transportgut zu gedrückt. Die auf die unteren Abschnitte der Finger 34 drückende Last des Transportgutes erhöht auf diese Weise die potentielle Rückhaltekraft der oberen Abschnitte der Finger 34.

Das in Fig. 2 gezeigte Basiselement 32 verfügt auf einer Seite über Stützlaschen 40, mit denen das Stützteil 12 am Förderorgan 6, dem Fördertuch 8 und/oder am Förderriemen 14 befestigt werden kann. Die Stützlaschen 40 können so lang ausgebildet sein, dass sie sich über die gesamte Breite des Förderriemens 14 erstrecken können.

Eine weitere Gestaltungsalternative ist in Fig. 3 dargestellt. In der Querschnittsansicht ist ein Förderriemen 14 mit dem in Fig. 2 gezeigten alternativ gestalteten Stützteil 12 kombiniert. Es ist erkennbar, dass der nach unten über das Basiselement 32 ragende Abschnitt des Fingers 34 tiefer nach unten ragt als das Fördertuch 8 an seinem tiefsten Punkt. Nach unten hin wird das Fördertuch 8 in dieser Ausgestaltung also über seine volle Höhe seitlich vom Finger 34 abgestützt. Das Fördertuch 8 kann im Bereich des nach unten über das Basiselement 32 ragenden Abschnitts des Fingers 34 mit diesem verbunden werden, allerdings ist diese Möglichkeit in der Fig. 2 nicht näher dargestellt. In Fig. 3 ist vielmehr eine Ausgestaltung gezeigt, bei der der Rand 18 des Fördertuchs 8 nicht in die Ausnehmung 16 eingelegt ist, sondern zumindest abschnittweise nur bis annähernd in den Anstoßbereich mit dem Förderriemen 14 reicht. Der Anstoßbereich der Ränder 18 des Fördertuchs 8 muß nicht auf einer Ebene mit den seitlichen Rändern der Förderriemen 14 liegen, sondern kann auch gestuft in einer darunter liegenden Ebene angeordnet sein. Der Höhensprung wird hier durch die Stützteile 12 überdeckt, deren Finger 34 unter die Förderriemen 14 ragen. Auch müssen die Ränder 18 des Fördertuchs 8 nicht genau in einer vertikalen Linie zu den Seiten der Förderriemen 14 enden, um im Anstoßbereich zu liegen, sondern können dazu auch etwas kürzer oder länger ausfallen. Die Abstützung des Transportgutes und die Abdichtung des Fördertuches 8 gegen Gutverluste im Bereich der Stufe von den Rändern 18 des Fördertuchs 8 zum Förderriemen 14 erfolgt bei dieser Ausgestaltung durch die Stützteile 12. Es ist also so, dass die Erfindung entweder durch das Einlegen des Fördertuchs 8 in die Ausnehmung 16 oder durch die mit dem Förderelement 14 verbundenen und davon bewegten Stützteile 12 oder eine Kombination dieser beiden Elemente realisiert werden kann.

Die unteren Enden der Finger 34 des in Fig. 3 gezeigten Ausführungsbeispiels können einzelnen in Abständen oder gesamt einen unter das Fördertuch 8 weisenden Vorsprung aufweisen, an dem das Fördertuch 8 mit den jeweiligen Fingern 34 verbindbar ist. Dadurch werden die Ränder 18 des Fördertuchs 8 abgestützt und lagefixiert.

Die in den Zeichnungen dargestellten Ausführungsbeispiele dienen lediglich der gegenständlichen Beschreibung der Erfindung und sollen diese keineswegs auf die erläuterten Ausführungsbeispiele beschränken. So ist es dem Fachmann möglich, den Gegenstand der vorstehend offenbarten Erfindung auf seine jeweiligen technischen Anforderungen anzupassen, insbesondere die Gestaltung der Stützteile 12 in beliebiger Form abzuwandeln. Dies kann beispielsweise erfolgen, indem die Form der Finger 34, das Abstandsmaß der benachbarten Finger 34 zueinander und die Höhe der Finger 34 variiert wird. Die Finger 34 müssen auch keine identische Höhe aufweisen, sondern können in der Höhe variieren. Auch kann die Flexibilität sowohl des Basiselementes 32 wie auch der Finger 34 an den jeweiligen Einsatzzweck angepaßt werden. So kann das Basiselement 32 eine größere Flexibilität aufweisen als die Finger 34, oder die Finger 34 weisen in einem Abschnitt eine Einschnürung auf, durch die diese leichter in eine Richtung schwenkbar sind. Auch können die gewünschten flexiblen Eigenschaften eines Stützteils 12 durch unterschiedliche Materialien und Materialmischungen in unterschiedlichen Abschnitten eines Stützteils 12 in gewünschter Weise beeinflußt werden. Schließlich ist darauf hinzuweisen, dass ein Stützteil 12 als günstiges Kunststoff-Spritzgußteil herstellbar ist.

## Patentansprüche

1. Fördervorrichtung (2) mit einem Tragrahmen (4), einem Förderorgan (6), das zumindest zwei parallel zueinander umlaufenden angetriebenen Förderriemen (14), ein zwischen den Förderriemen (14) angeordnetes Fördertuch (8) mit zumindest einer Ablagefläche (10) und das Förderorgan (6) sich seitlich sich über die Ebene der Ablageflächen (10) erhebende und über ein Basiselement (16) und zumindest einen vom Basiselement (16) aufragenden Finger (18) verfügende Stützteile (12) aufweist, und benachbarte Finger (18) so angeordnet sind, dass diese auf einer geraden Transportebene des Förderorgans (6) einen Zwischenraum (36) zwischen sich begrenzen, **dadurch gekennzeichnet, dass** zumindest ein Finger (34) eines Stützteils (12) bis in einen Bereich unterhalb des Basiselements (32) ragt und der nach unten über das Basiselement (32) ragende Abschnitt des Fingers (34) tiefer nach unten ragt als das Fördertuch (8) an seinem tiefsten Punkt.

2. Fördervorrichtung nach Anspruch 1, **dadurch gekennzeichnet, dass** die Stützteile (12) Bestandteile des endlos umlaufenden Förderorgans (6) sind, der oder die Finger (34) in einer annähernd senkrechten Richtung vom Basiselement (32) aufragen und zumindest das Basiselement (32) des Stützteils (12) aus einem flexiblen Material hergestellt ist.

3. Fördervorrichtung nach einem der vorhergehenden Ansprüche, **dadurch gekennzeichnet, dass** der Finger (34) in Querrichtung zur Förderrichtung (F) des Förderorgans (6) in zumindest einem Abschnitt eine Verdickung und/oder eine Stützrippe (38) aufweist.

4. Fördervorrichtung (2) nach einem der vorhergehenden Ansprüche, **dadurch gekennzeichnet, dass** der Finger (34) in einem zum Basiselement (32) entfernteren Abschnitt schmaler ist als in einem zum Basiselement (32) näher liegenden Abschnitt.

5. Fördervorrichtung (2) nach einem der vorhergehenden Ansprüche, **dadurch gekennzeichnet, dass** der Finger (34) parallel zur Förderrichtung (F) des Förderorgans (6) mittels einer Veränderung der räumlichen Lage des Basiselementes (32) verschwenkbar ist.

6. Fördervorrichtung (2) nach einem der vorhergehenden Ansprüche, **dadurch gekennzeichnet, dass** das Basiselement (32) leistenförmig ausgebildet ist und an einem Basiselement (32) mehrere Finger (34) befestigt sind.

7. Fördervorrichtung (2) nach einem der vorhergehenden Ansprüche, **dadurch gekennzeichnet, dass** das Fördertuch (8) im Bereich des nach unten über das Basiselement (32) ragenden Abschnitts des Fingers (34) mit diesem verbunden ist.

## Claims

1. Conveyor device (2) having a supporting frame (4) and having a conveying member (6) which has at least two driven propelling belts (14) which circulate in parallel with one another, a conveyor belt (8) arranged between the propelling belts (14) having at least one surface for deposit (10), and the conveying member (6) has supporting parts (12) which rise laterally above the plane of the surfaces for deposit (10) and which have a basis member (16) and at least one finger (18) projecting up from the base member (16), and adjacent fingers (18) are so arranged that that they define a gap (36) between themselves on a straight plane of conveyance of the conveying member (6), **characterized in that** at least one finger (34) of a supporting part (12) projects into a region below the base member (32), and that portion of the finger (34) which projects downwards beyond the base member (32) projects downwards to a lower point than the conveyor belt (8) does at its lowest point.

2. Conveyor device according to claim 1, **characterized in that** the supporting parts (12) are parts of the continuously circulating conveying member (6), the finger or fingers (34) project up from the base member (32) in an approximately perpendicular direction, and at least the base member (32) of the supporting part (12) is made of a flexible material.

3. Conveyor device according to either of the foregoing claims, **characterized in that** the finger (34) has in at least one portion a thickening and/or a supporting rib (38) in a direction transverse to the direction of conveyance (F) of the conveying member (6).

4. Conveyor device (2) according to one of the foregoing claims, **characterized in that** the finger (34) is narrower in a portion situated further away from the base member (32) than in a portion situated closer to the base member (32).

5. Conveyor device (2) according to one of the foregoing claims, **characterized in that** the finger (34) can be pivoted parallel to the direction of conveyance (F) of the conveying member (6) by means of a change in the position in space of the base member (32).

6. Conveyor device (2) according to one of the foregoing claims, **characterized in that** the base member (32) is of a strip-like form and a plurality of fingers (34) are fastened to a base member (32).

7. Conveyor device (2) according to one of the foregoing claims, **characterized in that** the conveyor belt (8) is connected to that portion of the finger (34) which projects downwards beyond the base member (32) in the region of the said portion.

## Revendications

1. Dispositif d'acheminement (2) avec un cadre porteur (4), un organe de transport (6), qui présente au moins deux courroies de transport (14) entraînées tournant parallèlement l'une à l'autre, une toile de transport (8) agencée entre les courroies de transport (14) et dotée d'au moins une surface de dépose (10) et l'organe de transport (6) présente des éléments d'appui (12) s'élevant latéralement au-dessus du plan des surfaces de dépose (10) et disposant d'un élément de base (16) et d'au moins un doigt (18) se dressant de l'élément de base (16), et des doigts (18) adjacents sont agencés de sorte à délimiter entre eux un espace intermédiaire (36) sur un plan de transport rectiligne de l'organe de transport (6), **caractérisé en ce qu'**au moins un doigt (34) d'un élément d'appui (12) avance jusque dans une zone sous l'élément de base (32) et la section du doigt (34) dépassant de l'élément de base (32) vers le bas avance plus vers le bas que la toile de transport (8) à son point le plus bas.

2. Dispositif d'acheminement selon la revendication 1, **caractérisé en ce que** les éléments d'appui (12) font partie de l'organe de transport (6) tournant sans fin, le ou les doigts (34) se dressent de l'élément de base (32) dans un sens approximativement perpendiculaire et au moins l'élément de base (32) de l'élément d'appui (12) est fabriqué en un matériau flexible.

3. Dispositif d'acheminement selon l'une quelconque des revendications précédentes, **caractérisé en ce que** le doigt (34) présente dans le sens transversal au sens de transport (F) de l'organe de transport (6) dans au moins une section, un épaississement et/ou une nervure d'appui (38).

4. Dispositif d'acheminement (2) selon l'une quelconque des revendications précédentes, **caractérisé en ce que** le doigt (34) est plus étroit dans une section plus éloignée de l'élément de base (32) que dans une section plus proche de l'élément de base (32).

5. Dispositif d'acheminement (2) selon l'une quelconque des revendications précédentes, **caractérisé en ce que** le doigt (34) peut être pivoté parallèlement au sens de transport (F) de l'organe de transport (6) à l'aide d'une modification de la position spatiale de l'élément de base (32).

6. Dispositif d'acheminement (2) selon l'une quelconque des revendications précédentes, **caractérisé en ce que** l'élément de base (32) est réalisé sous forme de baguette et plusieurs doigts (34) sont fixés sur un élément de base (32).

7. Dispositif d'acheminement (2) selon l'une quelconque des revendications précédentes, **caractérisé en ce que** la toile de transport (8) est reliée, dans la zone de la section du doigt (34) dépassant de l'élément de base (32) vers le bas, à celle-ci.
